# DEMANDE DE BREVET EUROPEEN

(11) **EP 1 219 910 A1**
(43) Date de publication de la demande: **03.07.2002**
(21) Numéro de dépôt: 01403336.9
(22) Date de dépôt: 21.12.2001
(51) Int. Cl.: F25J 3/04, B01D 53/047

(54) **Procédé d'alimentation en air d'au moins une unité à turbine à gaz et d'au moins une unité de distillation d'air, et installation de mise en oeuvre**

(30) Priorité: 29.12.2000 FR 0017321
(71) Demandeur: L'AIR LIQUIDE, Société Anonyme à Directoire et Conseil de Surveillance pour l'Etude et l'Exploitation des, 75321 Paris Cédex 07 (FR)
(72) Inventeur: Guillard, Alain, 75016 Paris (FR)
(74) Mandataire: Mercey, Fiona Susan

(57) **Abrégé**

Suivant ce procédé on alimente en air, avec un débit variable, l'appareil de distillation d'air (4) à la fois par un appareil de compression (10) et par une dérivation (48) du refoulement d'un compresseur (30) d'alimentation en air de l'unité à turbine à gaz (3), et on fait varier le débit d'alimentation de l'unité de distillation en faisant varier le débit de ladite dérivation (48).

## Description

La présente invention concerne un procédé d'alimentation en air d'au moins une unité à turbine à gaz et d'au moins une unité de distillation d'air munie en tête d'un appareil d'épuration d'air par adsorption, du type dans lequel on alimente en air, avec un débit variable, l'appareil de distillation d'air à la fois par un appareil de compression et par une dérivation du refoulement d'un compresseur d'alimentation en air de l'unité à turbine à gaz. Un procédé de ce type est décrit dans le document EP 795 728.

Il est fréquent sur les sites industriels qu'une unité à turbine à gaz côtoie une unité de distillation d'air.

L'unité à turbine à gaz participe par exemple à l'alimentation d'un réseau de distribution électrique. Cette unité comporte habituellement un compresseur en amont de sa chambre de combustion, alimentant cette dernière en air comprimé.

L'unité de distillation d'air fournit des produits issus de la distillation de l'air, typiquement un fluide riche en azote et un fluide riche en oxygène. L'appareil d'épuration d'air placé en tête de ce type d'unité comporte au moins deux adsorbeurs épurant l'air en eau et en CO₂. Ces adsorbeurs sont alimentés soit uniquement par un appareil de compression, soit à la fois par un tel appareil et par une dérivation du flux d'air alimentant la chambre de combustion de l'unité à turbine.

Ces adsorbeurs fonctionnent suivant un cycle où se succèdent principalement une phase d'adsorption épurant l'air entrant, et une phase de régénération destinée à nettoyer l'adsorbant pour la prochaine phase d'adsorption. La régénération de l'adsorbant est d'autant plus efficace qu'on l'applique à basse pression par rapport à celle maintenue pendant l'adsorption, ce qui nécessite de repressuriser l'adsorbeur après la phase de régénération.

Cette repressurisation est habituellement réalisée par une augmentation du débit d'air fourni par l'appareil de compression. Cependant, ce débit d'air supplémentaire implique un surdimensionnement, et donc un surcoût, de cet appareil, puisqu'il est demandé, par exemple, de fournir un débit d'air comprimé supplémentaire compris généralement entre 1 et 10% du débit nominal traité par l'appareil d'épuration, pendant au moins 10 minutes pour un temps de cycle de deux heures.

Par suite, en-dehors de cette durée de repressurisation, l'appareil de compression dédié fonctionne en-dessous de ses capacités nominales.

Un des buts de l'invention est d'éviter cet inconvénient dans des conditions économiquement satisfaisantes.

A cet effet, l'invention a pour objet un procédé du type précité, dans lequel on fait varier le débit d'alimentation de l'unité de distillation en faisant varier le débit de ladite dérivation.

Suivant d'autres caractéristiques de l'invention :
- l'appareil d'épuration d'air comporte au moins deux adsorbeurs principalement sélectivement en phase d'adsorption et en phase de régénération, la phase de régénération étant suivie d'une étape de repressurisation de l'adsorbeur, et on fait varier le débit de ladite dérivation cycliquement dans le temps, le maximum de ce débit étant atteint pendant la repressurisation d'un adsorbeur ;
- le débit de ladite dérivation se compose d'un débit de base positif sensiblement constant et d'un débit de supplément variable cycliquement qu'on ajoute au débit de base pendant au moins une partie de la repressurisation de chaque adsorbeur ;
- le débit de supplément est sensiblement compris entre environ 1 et 20% du débit de l'appareil de compression ;
- le débit de supplément est sensiblement compris entre environ 1 et 10% du débit de l'appareil de compression ;
- le débit de supplément est sensiblement inférieur à 4% du débit nominal du compresseur alimentant l'unité à turbine à gaz ;
- le débit de supplément est sensiblement inférieur à 2% du débit nominal du compresseur alimentant l'unité à turbine à gaz ;
- le débit de supplément est sensiblement inférieur à 1% du débit nominal du compresseur alimentant l'unité à turbine à gaz ;
- on maintient sensiblement constant le débit de l'appareil de compression ;

L'invention a également pour objet une installation d'alimentation en air d'au moins une unité à turbine à gaz et d'au moins une unité de distillation d'air munie en tête d'un appareil d'épuration d'air par adsorption pour la mise en oeuvre d'un procédé tel que défini ci-dessus, du type comprenant une ligne d'amenée d'air à l'appareil d'épuration d'air, un appareil de compression d'alimentation en air de l'appareil d'épuration d'air et raccordé à la ligne d'amenée, une dérivation raccordant partiellement le refoulement d'un compresseur d'alimentation en air de l'unité à turbine à gaz à l'alimentation en air de l'appareil d'épuration, caractérisée en ce que la dérivation comporte des moyens de régulation du débit d'air qu'elle véhicule.

Suivant d'autres caractéristiques de cette installation :
- l'appareil d'épuration d'air comporte au moins deux adsorbeurs principalement sélectivement en phase d'adsorption et en phase de régénération, la phase de régénération étant suivie d'une étape de repressurisation de l'adsorbeur, et les moyens de régulation sont adaptés pour commander une augmentation du débit d'air acheminé par la dérivation pendant tout ou partie de la phase de repressurisation de chaque adsorbeur ;
- l'unité de distillation d'air comporte en outre une ligne d'évacuation de l'air épuré par les adsorbeurs de l'appareil d'épuration, et des moyens de raccordement sélectif des adsorbeurs à la ligne d'amenée, à la ligne d'évacuation et entre eux, et les moyens de raccordement sont adaptés pour commander les moyens de régulation ;
- la dérivation comporte des moyens d'ajustement de pression entre celle du refoulement du compresseur de l'unité à turbine à gaz et celle maintenue en entrée de l'appareil d'épuration d'air ;
- la dérivation est raccordée à un étage intermédiaire de compression de l'appareil de compression ;
- la ligne d'amenée comporte, en aval du point de raccordement avec la dérivation, des moyens de variation de pression.

L'invention sera mieux comprise à la lecture de la description qui va suivre, donnée uniquement à titre d'exemple et faite en se référant au dessins annexés, sur lesquels :
- la figure 1 est une vue schématique d'une installation selon l'invention alimentant une unité de distillation d'air et une unité à turbine à gaz ;
- la figure 2 est une vue analogue à la figure 1, mais d'un second mode de réalisation d'une telle installation.

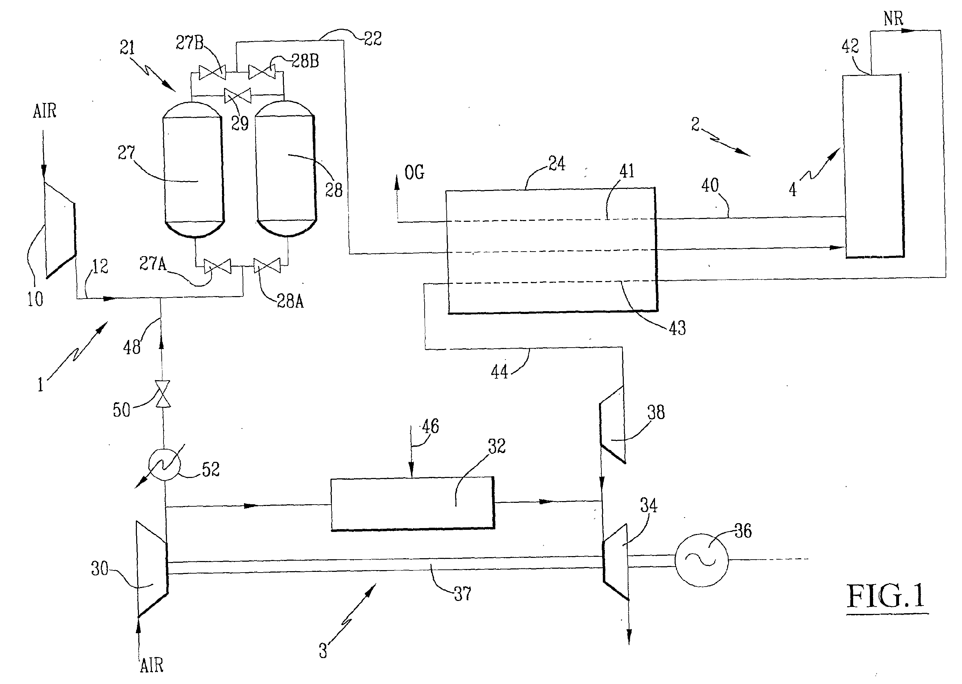

Sur la figure 1 est représentée une installation 1 d'alimentation en air d'une unité 2 de distillation d'air et d'une unité 3 à turbine à gaz.

L'installation 1 comporte un appareil de compression d'air 10 alimentant en air l'unité de distillation 2.

Cet appareil 10 comporte au moins un compresseur, tel que représenté, mais il peut en comporter plusieurs, agencés les uns par rapport aux autres selon divers aménagements de production d'air comprimé relevant de l'art connu.

De plus, cet appareil de compression peut alimenter en air d'autres unités non représentées, comme un réseau d'air de commande d'instruments par exemple.

L'installation 1 comporte de plus une ligne d'amenée d'air 12, alimentant l'unité de distillation 2.

L'unité 2 de distillation d'air comprend essentiellement :
- un appareil d'épuration d'air par adsorption 21,
- une ligne d'évacuation d'air 22 en sortie de l'appareil d'épuration 21,
- une ligne principale d'échange thermique 24,
- un appareil de distillation d'air 4, par exemple sous forme d'une double colonne de distillation ; il peut s'agir également d'une triple colonne.

L'unité 2 de distillation d'air est capable de produire, à différentes pressions, diverses puretés de mélanges riches en oxygène ou en azote. Elle peut produire également un mélange riche en argon destiné à être par la suite séparé.

L'appareil d'épuration 21 comporte deux adsorbeurs 27, 28, ainsi que des conduites de raccordement et des vannes 27A, 27B, 28A, 28B et 29 qui permettent de relier sélectivement chaque adsorbeur soit à la ligne 12, soit à la ligne 22, soit entre-eux.

L'unité 3 à turbine à gaz comprend essentiellement :
- un compresseur d'air 30, dont le débit nominal est très supérieur, par exemple cinq fois supérieur, à celui du compresseur 10,
- une chambre de combustion 32,
- une turbine 34 couplée au compresseur 30,
- un alternateur 36 entraîné par l'arbre 37 commun au compresseur 30 et à la turbine 34, et
- un compresseur 38.

Avant de décrire en détail le fonctionnement de l'installation 1 d'alimentation en air, les fonctionnements de l'unité 2 de distillation d'air et de l'unité 3 à turbine à gaz vont être rapidement rappelés, étant entendu qu'ils relèvent de l'art connu.

L'air à distiller, préalablement comprimé et épuré, est refroidi par la ligne principale d'échange thermique 24 jusqu'au voisinage de son point de rosée, puis est introduit dans l'appareil 4. Celui-ci produit via une conduite 40 de l'oxygène, qui est vaporisé, puis réchauffé dans des passages 41 de la ligne d'échange 24 en refroidissant l'air entrant.

De l'azote impur ou « résiduaire » NR, soutiré du sommet de la double colonne par une sortie 42, est renvoyé vers une série de passages 43 de la ligne d'échange 24. L'azote résiduaire se réchauffe dans ces passages 43 en provoquant le refroidissement de l'air à distiller. Cet azote résiduaire est ensuite envoyé, après compression en 38, vers l'unité 3 à turbine à gaz par une conduite 44.

Le fonctionnement général de l'unité 3 à turbine à gaz est le suivant.

De l'air comprimé est envoyé vers la chambre de combustion 32, dans laquelle un combustible sous pression, tel que du gaz naturel, est introduit via une conduite 46.

Les gaz issus de la combustion dans la chambre 32 sont mélangés au flux d'azote résiduaire circulant dans la conduite 44, comprimé dans le compresseur 38 sensiblement à la même pression, et envoyés vers l'admission de la turbine 34, où ils se détendent en entraînant la turbine 34, et, par l'intermédiaire de l'arbre 37, le compresseur 30 et l'alternateur 36. Cet alternateur 36 alimente par exemple un réseau de distribution électrique.

Pour alimenter en air les unités de distillation d'air 2 et à turbine à gaz 3, l'installation 1 met en oeuvre le procédé suivant.

D'une part, le compresseur 30 alimente en air comprimé l'unité à turbine 3.

D'autre part, l'unité de distillation 2 est alimentée en air comprimé à la fois par le compresseur 30 et par le compresseur 10. Tandis que la totalité du débit d'air comprimé du compresseur 10 est affecté à l'alimentation de l'unité de distillation d'air 2, seule une dérivation de débit est effectuée sur le refoulement du compresseur 30. Cette dérivation circule dans une conduite 48 munie d'une vanne de réglage 50 et reliée à la ligne 12. Par exemple, dans l'exemple numérique précité, le compresseur 10 et la dérivation 48 délivrent chacun dans la ligne 12 environ 10% du débit du compresseur 30. Ainsi, il circule dans la ligne d'amenée 12 environ 20% de ce débit, alimentant l'unité de distillation 2.

La conduite 48 est également munie d'un réfrigérant 52 alimenté par un circuit de refroidissement non-représenté. Ce réfrigérant abaisse la température de l'air le traversant si les traitements aval le nécessitent.

Les deux adsorbeurs 27 et 28 de l'appareil d'épuration en tête 21 suivent chacun un cycle où alternent une phase d'adsorption à une haute pression du cycle, c'est-à-dire supérieure à la pression atmosphérique, et une phase de régénération à basse pression, c'est-à-dire sensiblement à la pression atmosphérique, ou à une moyenne pression. Les adsorbeurs 27 et 28 fonctionnent en décalage, de telle sorte qu'à tout instant, il y a toujours au moins un adsorbeur en adsorption alimentant la ligne d'évacuation 22 en air comprimé épuré. Il convient de repressuriser un adsorbeur qui a atteint la fin de sa phase de régénération, de telle sorte qu'au moment où il recommence sa phase d'adsorption, il possède une pression sensiblement égale à celle maintenue dans la ligne 22.

Suivant le procédé de l'invention, cette repressurisation est assurée, au moins partiellement, par un débit d'air supplémentaire fourni par le compresseur 30 de l'unité à turbine à gaz 3. Ce débit supplémentaire s'ajoute au débit de base que maintient continûment la dérivation décrite précédemment.

Ce débit supplémentaire est régulé par la vanne 50 de telle sorte que, pendant la repressurisation d'un adsorbeur 27, 28, la vanne 50 laisse passer un débit d'air plus important que celui permis en-dehors de la durée de cette repressurisation. Par exemple, ce débit supplémentaire est compris entre environ 2 à 10% du débit d'air nominal traité par l'appareil d'épuration, durant environ au moins une dizaine de minutes pour un temps de cycle de 2 heures environ.

Le procédé et l'installation suivant l'invention permettent donc de dimensionner le compresseur 10 sur un débit maintenu sensiblement constant durant toute la durée de fonctionnement de l'installation.

Par ailleurs, dans la mesure où le débit supplémentaire dérivé du refoulement du compresseur 30 ne représente qu'une faible fraction, de l'ordre de quelques %, du débit total de ce compresseur, et eu égard aux courbes de rendement des turbines à gaz conventionnelles, le rendement global de l'unité de turbine à gaz reste ainsi sensiblement constant.

Aussi, l'énergie globale exportée du site, c'est-à-dire l'énergie produite moins l'énergie consommée moyennée sur une période de fonctionnement significative, est pratiquement constante.

Avantageusement, la vanne de réglage 50 est commandée par un dispositif de régulation non représenté, qui tient compte des mouvements de vannes de l'appareil d'épuration 21.

Ainsi, par exemple, en considérant que la bouteille 27 est en phase d'adsorption et que la bouteille 28, terminant sa phase de régénération, amorce son étape de repressurisation, les vannes d'alimentation 27A et d'évacuation 27B d'air de la bouteille 27 sont ouvertes, tandis que, tout en maintenant fermée la vanne d'évacuation 28B de la bouteille 28, la vanne 29 d'équilibrage de pression entre les deux adsorbeurs 27 et 28 s'ouvre progressivement de façon que la pression à l'intérieur de la bouteille 28 augmente. Cette repressurisation de l'adsorbeur 28 peut être complétée, suivant certains aménagements opératoires connus, par l'ouverture de la vanne d'alimentation 28A de cette bouteille, tout en maintenant fermée la vanne d'évacuation 28B.

L'ouverture de la vanne d'équilibrage 29, ainsi que celle de la vanne d'alimentation 28A le cas échéant, sont prises en compte par le dispositif de régulation précité et entraîne l'augmentation du débit d'air acheminé par la ligne 48, par augmentation de l'ouverture de la vanne 50 et/ou par une sollicitation accrue du compresseur 30.

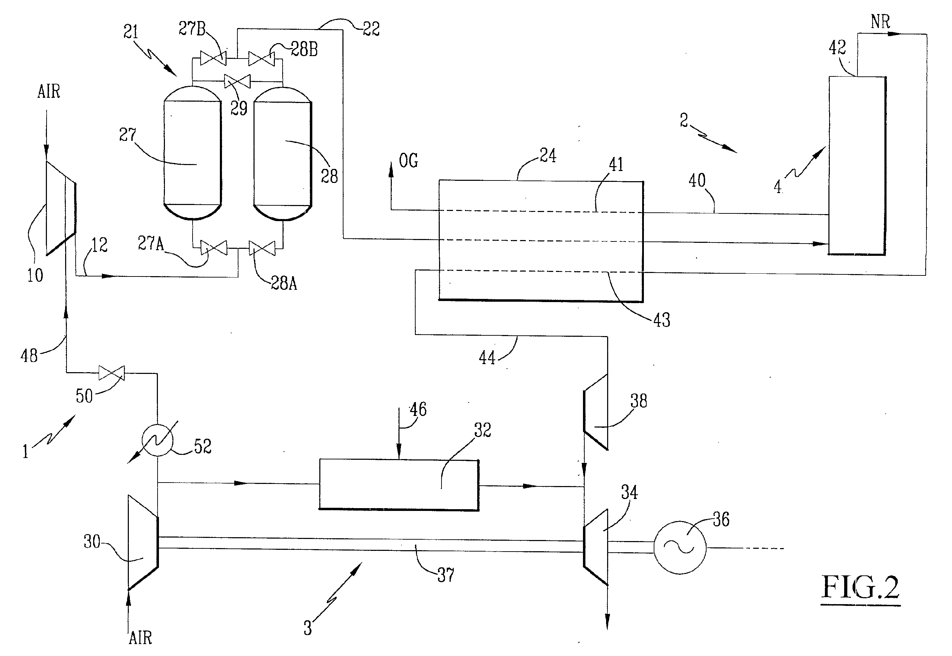

Sur la figure 2 est représenté un second mode de réalisation de l'installation 1 ne se distinguant de celle représentée sur la figure 1 que par le point de raccordement de la dérivation 48 vis-à-vis de l'alimentation en air de l'unité de distillation 2.

Suivant ce mode de réalisation, la dérivation 48 est raccordée à un étage intermédiaire de l'appareil de compression 10. Le fonctionnement de ce mode de réalisation est analogue à celui de l'installation représentée sur la figure 1.

Il est ainsi possible de corriger un écart de pression entre celle du refoulement du compresseur 30 et celle maintenue en entrée de l'appareil d'épuration d'air 21.

Une variante non-représentée, capable elle aussi d'une telle correction de pression, consiste à munir la dérivation 48 d'un ou de plusieurs compresseurs et/ou de surpresseurs.

Une autre variante, non-représentée également, consiste à munir la dérivation 48 d'une vanne de détente ou d'une turbine, capable cette fois d'abaisser la pression du refoulement du compresseur 30 avant son raccordement à l'alimentation en air de l'appareil d'épuration 21.

Il est également à noter qu'une correction de pression est envisageable au niveau de la ligne d'amenée 12, en aval du point de raccordement de la dérivation 48, au moyen d'un surpresseur ou d'une turbine par exemple.

En variante du procédé, l'alimentation en air de l'unité de distillation d'air 2 est assurée exclusivement par l'appareil de compression 10, sauf pendant la repressurisation d'un adsorbeur, durant laquelle la vanne 50 permet le passage du débit supplémentaire précédemment décrit.

## Revendications

1. Procédé d'alimentation en air d'au moins une unité à turbine à gaz et d'au moins une unité de distillation d'air comprenant un appareil d'épuration d'air (21) par adsorption comprenant au moins deux adsorbeurs (27, 28) principalement sélectivement en phase d'adsorption et en phase de régénération, la phase de régénération étant suivie d'une étape de repressurisation de l'adsorbeur, du type dans lequel on alimente en air, avec un débit variable, l'appareil de distillation d'air à la fois par un appareil de compression (10) et par une dérivation (48) du refoulement d'un compresseur (30) d'alimentation en air de l'unité à turbine à gaz (3), **caractérisé en ce qu'**on fait varier le débit d'alimentation de l'unité de distillation en faisant varier le débit de ladite dérivation cycliquement dans le temps.

2. Procédé suivant la revendication 1, **caractérisé en ce que** le maximum du débit de dérivation est atteint pendant la repressurisation d'un adsorbeur.

3. Procédé suivant la revendication 2, **caractérisé en ce que** le débit de ladite dérivation se compose d'un débit de base positif sensiblement constant et d'un débit de supplément variable cycliquement qu'on ajoute au débit de base pendant au moins une partie de la repressurisation de chaque adsorbeur (27,28).

4. Procédé suivant la revendication 3, **caractérisé en ce que** le débit de supplément est sensiblement compris entre environ 1 et 20% du débit de l'appareil de compression (10).

5. Procédé suivant l'une des revendications 3 ou 4, **caractérisé en ce que** le débit de supplément est sensiblement compris entre environ 1 et 10% du débit de l'appareil de compression (10).

6. Procédé suivant l'une des revendications précédentes, **caractérisé en ce que** le débit de supplément est sensiblement inférieur à 4% du débit nominal du compresseur (30) alimentant l'unité à turbine à gaz (3).

7. Procédé suivant l'une des revendications précédentes, **caractérisé en ce que** le débit de supplément est sensiblement inférieur à 2% du débit nominal du compresseur (30) alimentant l'unité à turbine à gaz (3).

8. Procédé suivant l'une des revendications précédentes, **caractérisé en ce que** le débit de supplément est sensiblement inférieur à 1% du débit nominal du compresseur (30) alimentant l'unité à turbine à gaz (3).

9. Procédé suivant l'une des revendications précédentes, **caractérisé en ce qu'**on maintient sensiblement constant le débit de l'appareil de compression (10).

10. Installation d'alimentation en air d'au moins une unité à turbine à gaz et d'au moins une unité de distillation d'air munie en tête d'un appareil d'épuration d'air (21) par adsorption pour la mise en oeuvre d'un procédé selon l'une quelconque des revendications précédentes, du type comprenant une ligne (12) d'amenée d'air à l'appareil d'épuration d'air, un appareil de compression (10) d'alimentation en air de l'appareil d'épuration d'air et raccordé à la ligne d'amenée, une dérivation (48) raccordant partiellement le refoulement d'un compresseur (30) d'alimentation en air de l'unité à turbine à gaz (3) à l'alimentation en air de l'appareil d'épuration, **caractérisée en ce que** la dérivation (48) comportant des moyens de régulation du débit d'air (50) qu'elle véhicule **caractérisée en ce que** les moyens de régulation sont des moyens permettant de varier le débit cycliquement dans le temps.

11. Installation suivant la revendication 10, **caractérisée en ce que** l'appareil d'épuration d'air (21) comporte au moins deux adsorbeurs (27, 28) principalement sélectivement en phase d'adsorption et en phase de régénération, la phase de régénération étant suivie d'une étape de repressurisation de l'adsorbeur, et **en ce que** les moyens de régulation (50) sont adaptés pour commander une augmentation du débit d'air acheminé par la dérivation (48) pendant tout ou partie de la phase de repressurisation de chaque adsorbeur.

12. Installation suivant la revendication 11, **caractérisée en ce que** l'unité de distillation d'air (1) comporte en outre une ligne d'évacuation (22) de l'air épuré par les adsorbeurs (27, 28) de l'appareil d'épuration (21), et des moyens (27A, 27B, 28A, 28B, 29) de raccordement sélectif des adsorbeurs à la ligne d'amenée (12), à la ligne d'évacuation et entre eux, et **en ce que** les moyens de raccordement sont adaptés pour commander les moyens de régulation (50).

13. Installation suivant l'une des revendications 10 à 12, **caractérisée en ce que** la dérivation (48) comporte des moyens d'ajustement de pression entre celle du refoulement du compresseur (30) de l'unité à turbine à gaz (3) et celle maintenue en entrée de l'appareil d'épuration d'air (21).

14. Installation suivant l'une des revendications 10 à 13, **caractérisée en ce que** la dérivation (48) est raccordée à un étage intermédiaire de compression de l'appareil de compression (10).

15. Installation suivant l'une des revendications 10 à 14, **caractérisée en ce que** la ligne d'amenée (12) comporte, en aval du point de raccordement avec la dérivation (48), des moyens de variation de pression.
